# EUROPÄISCHE PATENTSCHRIFT

(11) **EP 1 180 425 B1**
(45) Veröffentlichungstag und Bekanntmachung des Hinweises auf die Patenterteilung: **14.05.2003**
(21) Anmeldenummer: 01118503.0
(22) Anmeldetag: 01.08.2001
(51) Int. Cl.: B29C 51/26, B65H 20/06, B29C 51/16

(54) **Verfahren zum Transportieren einer Folienbahn aus thermoplastischem Kunststoff und Vorrichtung zur Durchführung des Verfahrens**
Method and apparatus for transporting a thermoplastic foil
Procédé et appareil de transport une feuille thermoplastique

(30) Priorität: 14.08.2000 DE 10039692
(43) Veröffentlichungstag der Anmeldung: 20.02.2002
(73) Patentinhaber: Illig, Adolf Maschinenbau GmbH & Co., 74081 Heilbronn (DE)
(72) Erfinder: Karbach, Helmut, 74172 Neckarsulm (DE)

(56) Entgegenhaltungen:
- DE-A- 19 741 838
- DE-U- 20 007 743

## Beschreibung

Die Erfindung betrifft ein Verfahren zum Transportieren einer Folienbahn aus thermoplastischem Kunststoff in einer Vorrichtung zum Überziehen von Teilen mit dieser Folienbahn nach der Gattung des Hauptanspruches, sowie eine Vorrichtung zur Durchführung des Verfahrens.

Aus der DE 30 06 860 A 1 ist es bekannt, in einer Formstation ein zuvor gefertigtes und zu überziehendes Teil in einer Form bereit zu halten, mit einer über eine Transporteinheit abschnittsweise zugeführten Kunststofffolie zu überziehen und die Kunststofffolie rings um das überzogene Teil zu durchtrennen. Das Beheizen der Kunststofffolie erfolgt in der Formstation durch eine in diese von der Rückseite einschiebbare Heizung. Zum Transportieren der Folienbahn dient eine Transporteinrichtung, bestehend aus umlaufenden Transportketten mit Spitzlaschen, die in den Rand der Folienbahn eindringen und diese dadurch mitnehmen. Die Zufuhr der zu überziehenden Teile erfolgt durch denselben Transport von einem Stapel aus. Das heißt, die Teile werden zunächst aus einer tiefziehfähigen Platte gefertigt und dann überzogen. Dieses Verfahren ist begrenzt auf das Überziehen von Teilen, die aus thermoplastischem Kunststoff bestehen und sich von der Gestalt her Tiefziehen lassen. Es ist nicht vorgesehen zum Überziehen von Teilen aus Metall oder z. B. Pressstoffen gleich welchen Materials. Der Transport der Überzugsfolie über Transportketten ist nicht geeignet, eine dünne Folienbahn mit geringer Festigkeit in die Formstation zu transportieren, da die Folie an den Einstechstellen seitlich ausreißt, vor allem, wenn die intermittierende Transportbewegung mit schneller Geschwindigkeit erfolgt, wie es zur Erzielung einer hohen Taktzahl der Vorrichtung erforderlich ist.
Nach dem Überziehen und Austrennen der Teile verbleibt von der Folienbahn ein Restgitter aus Stegen, das sich sehr schwierig handhaben lässt, um es einer Aufwickeleinrichtung oder einer Zerkleinerungseinrichtung zuzuführen. Zugspannungen auf dieses Restgitter führen zum Zerreißen und damit zu Störungen.

Die bekannte Vorrichtung ist aus baulichen Gründen - Vorschaltung eines Plattenstapels - nicht geeignet, eine lineare Zufuhr von separat gefertigten und zu überziehenden Teilen auf den Formtisch vorzunehmen und die fertig überzogenen Teile zu einer Abgabestelle zu überführen.

Aus der DE-OS 29 15 923 ist eine Vorrichtung und ein Verfahren gemass dem einleitenden Teil der Ansprüche 1 und 7 zum Überziehen von Teilen bekannt, die abwechselnd über zwei Wagen der Formstation zugeführt werden. Es gibt also zwei kombinierte Beladestationen/Entladestationen, was die Bedienung der Vorrichtung durch das Bedienungspersonal und eine automatische Verpackung der überzogenen Teile erschwert. Der Folientransport erfolgt bei dieser Vorrichtung ebenfalls über Transportketten mit den bereits beschriebenen Nachteilen. Die Gestaltung des Folientransportes erlaubt keine lineare Zufuhr von Teilen und nachfolgende Weiterleitung von überzogenen Teilen von einer Zuführstelle über die Formstation zu einer Abgabestelle.

Der Erfindung liegt die Aufgabe zugrunde, das Verfahren zum Transport der Folienbahn so durchzuführen, dass auch dünne, labile Kunststofffolien mit geringer Festigkeit sicher und störungsfrei in die Formstation transportiert werden können und auch der Abtransport des Folienrestgitters problemlos erfolgt. Das Einführen einer neuen Folienbahn in die Transporteinrichtung sollte auf einfache Weise erfolgen können. Das Verfahren sollte die lineare Zufuhr von zu überziehenden Teilen zu einer Formstation und den Weitertransport der überzogenen Teile zu einer Abgabestelle ermöglichen.

Zur Lösung der Aufgabe werden die Merkmale des Hauptanspruches vorgeschlagen. Die Vorrichtung zur Durchführung des Verfahrens ist gekennzeichnet durch die Merkmale des Anspruches 7. Bevorzugte Ausführungen der Erfindung sind in den Ansprüchen 2 bis 6 und 8 bis 13 definiert.

Das Verfahren ist anhand der schematischen Zeichnungen der Vorrichtung näher beschrieben. Es zeigen:

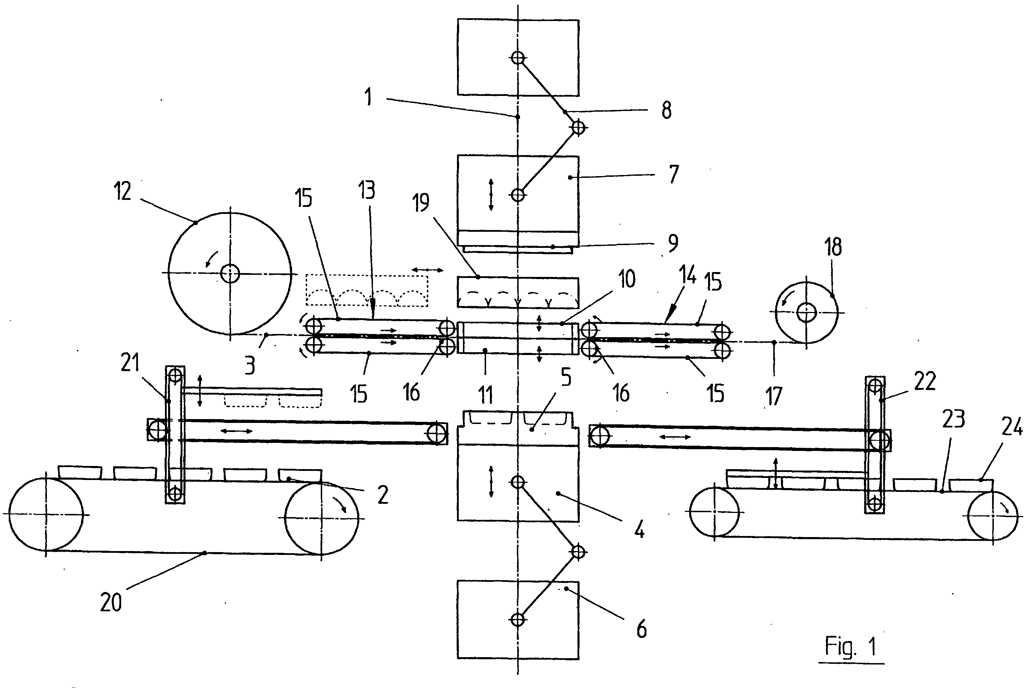

- Figur 1: eine Vorderansicht der Vorrichtung.
- Figur 2: eine Vorderansicht der Vorrichtung gemäß einer Weiterbildung der Erfindung.

Die Vorrichtung weist eine Formstation 1 auf, in der das Überziehen der Teile 2 mit einer Folie 3 vorgenommen wird. Sie besteht aus einem höhenbeweglichen Tisch 4 mit einem Kaschierwerkzeug 5 und einem entsprechenden Antrieb 6 sowie aus einem höhenbeweglichen Obertisch 7 mit einem Antrieb 8. Der Obertisch 8 trägt das Stanzwerkzeug 9. Ferner sind in dieser Formstation 1 zwei höhenbewegliche Spannrahmen 10, 11 vorgesehen, die die Folienbahn 3 zwischen sich einspannen. Diese wird von einer Folienrolle 12 abgewickelt und von einer Transporteinrichtung intermittierend der Formstation 1 zugeführt. Die Transporteinrichtung besteht aus zwei Transporteinheiten 13, 14, die sich je aus zwei umlaufenden, gegeneinander gedrückten Transportbändern 15 zusammensetzen. Eine der Umlenkwalzen 16 jedes Transportbandes 15 wird von einem nicht dargestellten Antrieb intermittierend bewegt. Die beiden Transporteinheiten 13, 14 sind in Durchlaufrichtung der Folienbahn 3 vor bzw. nach der Formstation 1 angeordnet. Dabei transportiert die Transporteinheit 14 das verbleibende Restgitter 17, das zu einer Rolle 18 aufgewickelt wird. Eine Zufuhr zu einer Mühle oder einer Zerkleinerungsanlage ist ebenfalls möglich.

Eine Heizung 19 ist so angeordnet und gestaltet, dass sie zwischen der Formstation 1 und einer Ruheposition seitlich davon oder auf der Rückseite verschoben werden kann. Die Zufuhr der zu überziehenden Teile 2 kann bei der erfindungsgemäßen Ausbildung der Transporteinrichtung und entsprechender Anordnung der Folienrolle 12 automatisiert erfolgen, indem sie von einer Einlegeeinrichtung 21 von einem Transportband 20, von einem Stapel oder aus einem Kammerband aufgenommen und in das Kaschierwerkzeug 5 eingelegt werden. Auf der gegenüberliegenden Seite der Formstation 1 ist analog eine Aushebeeinrichtung 22 angeordnet, die die überzogenen und ausgetrennten Teile 24 auf ein Transportband 23 übergibt oder auf andere Weise einer Weiterbearbeitung zuführt.

### Das Verfahren läuft wie nachfolgend beschrieben ab:

Bei geöffneten Spannrahmen 10, 11 wird ein Abschnitt der kalten Folienbahn 3 durch gleichzeitige Bewegung der Transporteinheiten 13, 14 in die Formstation 1 geführt und dann von den Spannrahmen 10, 11 festgeklemmt. Gleichzeitig werden die zu überziehenden Teile 2 von der Einlegeeinrichtung 21 in das Kaschierwerkzeug 5 eingelegt. Die Heizung 19 fährt in die Formstation 1 und beheizt den eingespannten Folienbahnabschnitt. Ist dessen Verformungstemperatur erreicht, fährt der Tisch 4 mit dem Kaschierwerkzeug 5 aufwärts und durch Anlegen von Vakuum wird das Überziehen der Teile 2 in bekannter Weise vorgenommen. Während dieses Überziehens verbleibt die Heizung 19 noch für eine gewisse Zeit in der Formstation 1 und wird dann weggefahren. Nach einer vorgegebenen Kühlzeit fährt der Obertisch 7 abwärts und das Stanzwerkzeug 9 trennt die Folienbahn 3 rings um das überzogene Teil 24 aus, so dass der Tisch 4 abgesenkt und die überzogenen Teile 24 mittels der Aushebeeinrichtung 22 aus dem Kaschierwerkzeug 5 entnommen werden können. Der Obertisch 7 fährt aufwärts, die Spannrahmen 10, 11 öffnen und der nächste Takt beginnt.

Die Ausbildung der Transporteinrichtung in Form der beiden Transporteinheiten 13, 14 mit umlaufenden Transportbändern 15 bietet eine optimale Auflage und Planhaltung der Folienbahn 3 bzw. des Restgitters 17 sowie einen gleichmäßigen Zug auf die ganze Folienbreite beim Abwickeln von der Folienrolle 12. Gemäß einer besonderen Ausbildung der Erfindung wird vorgeschlagen, die Transportgeschwindigkeit der in Durchlaufrichtung nach der Formstation 1 angeordneten Transporteinheit 14 geringfügig höher einzustellen als die Transportgeschwindigkeit der Transporteinheit 13, wodurch eine leichte Verstreckung des Restgitters 17 erfolgt und dessen eventuelle Längung in der Formstation 1 während des Überziehprozesses ausgeglichen wird.
Um den Beginn einer neuen Folienbahn 3 in die Transporteinheiten 13, 14 einführen zu können, gibt es verschiedene Lösungen. Wenn man die jeweils oberen umlaufenden Transportbänder 15 als Ganzes abhebbar gestaltet, kann man von Hand die Folienbahn 3 durch beide Transporteinheiten 13, 14 hindurchführen bis zur Rolle 18 bzw. bis zu einer Zerkleinerungseinrichtung. Nach dem Einführen der Folienbahn 3 werden die oberen Transportbänder 15 dann wieder abgesenkt und auf die unteren Transportbänder 15 gedrückt.

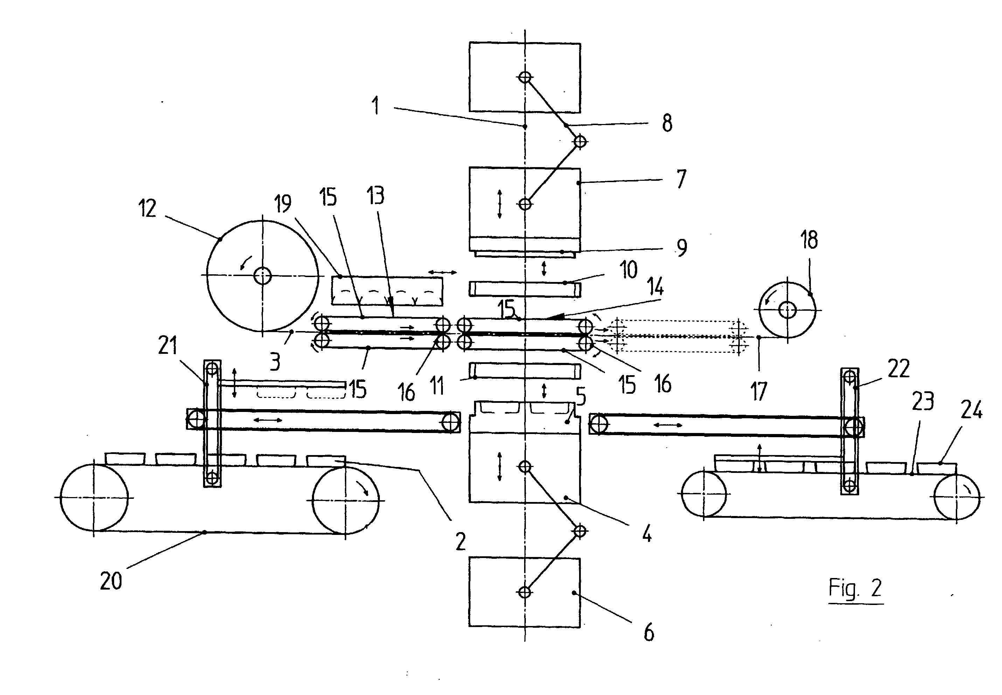

Eine Automatisierung des Einführens einer neuen Folienbahn 3 kann in der Weise erfolgen, dass die Transporteinheit 14 horizontal verschiebbar bis unmittelbar an die Transporteinheit 13 heran ausgebildet ist (Figur 2). Zum Einführen wird die Folienbahn 3 nur zwischen die beiden eingangsseitigen Umlenkwalzen 16 der Transporteinheit 13 gebracht. Durch gleiche Drehung beider Transporteinheiten 13, 14 wird die Folienbahn 3 bis hinter die Transporteinheit 14 geführt. Dann wird die Transporteinheit 14 horizontal in Arbeitsstellung gefahren, während dieser Bewegung drehen sich die Transportbänder 15 der Transporteinheit 13 weiter, die Transportbänder 15 der Transporteinheit 14 drehen sich nicht.

## Patentansprüche

1. Verfahren zum Transportieren einer Folienbahn (3) aus thermoplastischem Kunststoff in einer Vorrichtung zum Überziehen von Teilen (2) mit dieser Folienbahn (3) und zum Weitertransport des Restgitters (17) zu einer Aufwickeleinrichtung bzw. Zerkleinerungsanlage, **dadurch gekennzeichnet, dass** die Folienbahn (3) in Durchlaufrichtung vor der Formstation (1) in kaltem Zustand zwischen zwei taktweise umlaufende, gegeneinander gedrückte Transportbänder (15) einer ersten Transporteinheit (13) gehalten und das Restgitter (17) in Durchlaufrichtung nach der Formstation (1) ebenfalls zwischen zwei taktweise umlaufenden, gegeneinander gedrückten Transportbändern (15) einer zweiten Transporteinheit (14) gehalten wird.

2. Verfahren nach Anspruch 1, **dadurch gekennzeichnet, dass** die Transportgeschwindigkeit beider Transporteinheiten (13, 14) gleich ist.

3. Verfahren nach Anspruch 1, **dadurch gekennzeichnet, dass** die Transportgeschwindigkeit beider Transporteinheiten (13, 14) unterschiedlich ist.

4. Verfahren nach einem der Ansprüche 1 bis 3, **dadurch gekennzeichnet, dass** zum Einführen der Folienbahn (3) die Transportbänder (15) der Transporteinheiten (13, 14) auf Abstand gebracht, die Folienbahn (3) zwischen die Transportbänder (15) eingeführt und die Transportbänder (15) wieder aufeinander gedrückt werden.

5. Verfahren nach einem der Ansprüche 1 bis 3, **dadurch gekennzeichnet, dass** zum Einführen der Folienbahn (3) die zweite Transporteinheit (14) aus einer Arbeitslage entgegen der Transportrichtung der Folienbahn (3) verschoben, die Folienbahn (3) in beide Transporteinheiten (13, 14) eingeführt und die zweite Transporteinheit (14) bei umlaufenden Transportbändern (15) der ersten Transporteinheit (13) und stehenden Transportbändern (15) der zweiten Transporteinheit (14) in Durchlaufrichtung in Ausgangslage verschoben wird.

6. Verfahren nach einem der Ansprüche 1 bis 5, **dadurch gekennzeichnet, dass** die zu überziehenden Teile (2) von einer unterhalb der ersten Transporteinheit (13) angeordneten Einlegeeinrichtung (21) in das Kaschierwerkzeug (5) eingelegt und die überzogenen Teile (24) von einer unterhalb der zweiten Transporteinheit (14) angeordneten Aushebeeinrichtung (22) aus dem Kaschierwerkzeug (5) entnommen werden.

7. Vorrichtung zum Überziehen von Teilen (2) mit einer thermoplastischen Folienbahn (3) und zum Austrennen der überzogenen Teile (24) in einer Formstation (1) mit einem höhenbeweglichen Kaschierwerkzeug (5) zum Aufnahmen der Teile (2, 24) und mit einer Transporteinrichtung zum abschnittsweisen Führen der Folienbahn (3) in die Formstation (1), **dadurch gekennzeichnet, dass** die Transporteinrichtung für die Folienbahn (3) von zwei Transporteinheiten (13, 14) gebildet wird, die jeweils aus zwei umlaufenden, gegeneinander gedrückten Transportbändern (15) bestehen, wobei die Transporteinheiten (13, 14) in Durchlaufrichtung vor bzw. nach der Formstation (1) angeordnet sind.

8. Vorrichtung nach Anspruch 7, **dadurch gekennzeichnet, dass** die beiden Transporteinheiten (13, 14) mit synchron bewegten Antrieben in Wirkverbindung stehen.

9. Vorrichtung nach Anspruch 7, **dadurch gekennzeichnet, dass** die beiden Transporteinheiten (13, 14) mit Antrieben mit unterschiedlicher Geschwindigkeit in Wirkverbindung stehen.

10. Vorrichtung nach einem der Ansprüche 7 bis 9, **dadurch gekennzeichnet, dass** die in Durchlaufrichtung nach der Formstation (1) angeordnete Transporteinheit (14) in Richtung der ersten Transporteinheit (13) verschiebbar ausgebildet ist.

11. Vorrichtung nach einem der Ansprüche 7 bis 9, **dadurch gekennzeichnet, dass** die Transportbänder (15) in ihrem Abstand veränderbar ausgebildet sind.

12. Vorrichtung nach einem der Ansprüche 7 bis 11, **dadurch gekennzeichnet, dass** die Anpresskraft zwischen den beiden Transportbändern (13, 14) einer oder beider Transporteinheiten (13, 14) einstellbar ausgebildet ist.

13. Vorrichtung nach einem der Ansprüche 7 bis 12, **dadurch gekennzeichnet, dass** unterhalb der ersten Transporteinheit (13) eine Einlegeeinrichtung (21) für die zu überziehenden Teile (2) und unterhalb der zweiten Transporteinheit (14) eine Aushebeeinrichtung (22) für die überzogenen Teile (24) angeordnet ist.

## Claims

1. Method of transporting a film strip (3) of thermoplastic synthetic material into a device for covering over articles (2) by this film strip (3) and for further transport of the lattice residue (17) to a reeling-up device or comminuting installation, **characterised in that** the film strip (3) is held, in transit direction in front of the moulding station (1), in cold state between two intermittently circulating transport belts (15), which are pressed towards one another, of a first transport unit (13) and the lattice residue (17) is similarly held, in transit direction after the moulding station (1), between two intermittently circulating transport belts (15), which are pressed towards one another, of a second transport unit (14).

2. Method according to claim 1, **characterised in that** the transport speed of the two transport units (13, 14) is the same.

3. Method according to claim 1, **characterised in that** the transport speed of the two transport units (13, 14) is different.

4. Method according to one of claims 1 to 3, **characterised in that** for introduction of the film strip (3) the transport belts (15) of the transport units (13, 14) are brought to a spacing, the film strip (3) is introduced between the transport belts (15) and the transport belts (15) are again pressed against one another.

5. Method according to one of claims 1 to 3, **characterised in that** for introduction of the film strip (3) the second transport unit (14) is displaced out of a working position against the transport direction of the film strip (3), the film strip (3) is introduced into both transport units (13, 14) and the second transport unit (14) is displaced in transit direction into the starting position when the transport belts (15) of the first transport unit (13) are circulating and the transport belts (15) of the second transport unit (14) are stationary.

6. Method according to one of claims 1 to 5, **characterised in that** the articles (2) to be covered over are inserted into the laminating tool (5) by an inserting device (21) arranged below the first transport unit (13) and the covered-over articles (24) are removed from the laminating tool (5) by a lifting-out device (22) arranged below the second transport unit (14).

7. Device for covering over articles (2) by a thermoplastic film strip (3) and for separating the covered-over articles (24) in a moulding station (1), with a laminating tool (5), which is movable in height, for receiving the articles (2, 24) and with a transport device for section-by-section conducting of the film strip (3) into the moulding station (1), **characterised in that** the transport device for the film strip (3) is formed by two transport units (13, 14), each consisting of two circulating transport belts (15) pressed towards one another, wherein the transport units (13, 14) are arranged in transit direction in front of and after the moulding station (1).

8. Device according to claim 7, **characterised in that** the two transport units (13, 14) are disposed in operative connection with synchronously moved drives.

9. Device according to claim 7, **characterised in that** the two transport units (13, 14) are disposed in operative connection with drives with different speeds.

10. Device according to one of claims 7 to 9, **characterised in that** the transport unit (14) arranged after the moulding station (1) in transit direction is constructed to be displaceable in the direction of the first transport unit (13).

11. Device according to one of claims 7 to 9, **characterised in that** the transport belts (15) are constructed to be variable in their spacing.

12. Device according to one of claims 7 to 11, **characterised in that** the pressing force between the two transport belts (13, 14) of one or both transport units (13, 14) is formed to be settable.

13. Device according to one of claims 7 to 12, **characterised in that** an inserting device (21) for the articles (2) to be covered over is arranged below the first transport unit (13) and a lifting-out device (22) for the covered-over articles (24) is arranged below the second transport unit (14).

## Revendications

1. Procédé de transport d'une bande de film (3) en matière thermoplastique dans un dispositif pour revêtir des pièces (2) à l'aide de ce film (3) et pour continuer de transporter la grille résiduelle (17) sur une installation d'enroulement ou une installation de découpe,
**caractérisé en ce que**
la bande de film (3) est maintenue dans une première unité de transport (13) à l'état froid entre deux bandes transporteuses (15) pressées l'une contre l'autre et tournant pas à pas, en amont de la station de formage (1), dans le sens du défilement, et la grille résiduelle (17) est également tenue entre deux bandes transporteuses (15) pressées l'une contre l'autre et tournant pas à pas, d'une seconde unité de transport (14) en aval de la station de formage (1), dans le sens de défilement.

2. Procédé selon la revendication 1,
**caractérisé en ce que**
la vitesse de transport des deux unités de transport (13, 14) est la même.

3. Procédé selon la revendication 1,
**caractérisé en ce que**
la vitesse de transport des deux unités de transport (13, 14) est différente.

4. Procédé selon l'une quelconque des revendications 1 à 3,
**caractérisé en ce que**
pour introduire la bande de film (3), les bandes transporteuses (15) des unités de transport (13, 14) sont écartées, puis on introduit la bande de film (3) entre les bandes transporteuses (15) et on presse de nouveau les bandes transporteuses (15) l'une contre l'autre.

5. Procédé selon l'une quelconque des revendications 1 à 3,
**caractérisé en ce que**
pour introduire la bande de film (3), on déplace la seconde unité de transport (4) d'une position active, dans la direction opposée à la direction de transport du film (3), on introduit le film (3) dans les deux unités de transport (13, 14) et, pendant que les bandes transporteuses (15) de la première unité de transport (13) tournent et que les bandes transporteuses (15) de la seconde unité de transport (14) sont immobiles, on fait passer la seconde unité de transport (14) en position de repos dans le sens du défilement.

6. Procédé selon l'une quelconque des revendications 1 à 5,
**caractérisé en ce que**
les pièces (2) à revêtir sont placées dans l'outil de laminage (5) d'une installation (21) située en dessous de la première unité de transport (13) et les pièces (24) revêtues sont extraites de l'outil de laminage (5) par une installation de soulèvement (22) prévue en dessous de la seconde unité de transport (14).

7. Dispositif pour revêtir des pièces (2) d'une bande de film (3) de matière thermoplastique et pour séparer les pièces revêtues (24) dans une station de formage (1) avec un outil de laminage (5) mobile en hauteur, pour recevoir les pièces (2, 24) ainsi qu'une installation de transport pour guider par segments, le film (3) dans la station de formage (1),
**caractérisé en ce que**
l'installation de transport du film (3) est formée par deux unités de transport (13, 14) composées chaque fois de deux bandes transporteuses (15) en mouvement, pressées l'une contre l'autre, et les unités de transport (13, 14) sont en amont ou en aval de la station de formage (1) selon le sens de défilement.

8. Dispositif selon la revendication 7,
**caractérisé en ce que**
les deux unités de transport (13, 14) coopèrent avec des moyens d'entraînement déplacés en synchronisme.

9. Dispositif selon la revendication 7,
**caractérisé en ce que**
les deux unités de transport (13, 14) coopèrent avec des moyens d'entraînement fonctionnant avec des vitesses différentes.

10. Dispositif selon l'une quelconque des revendications 7 à 9,
**caractérisé en ce que**
l'unité de transport (14), prévue en aval de la station de formage, dans le sens du défilement, peut coulisser en direction de la première unité de transport (13).

11. Dispositif selon l'une quelconque des revendications 7 à 9,
**caractérisé en ce que**
les bandes transporteuses (15) sont d'écartement réglable.

12. Dispositif selon l'une quelconque des revendications 7 à 11,
**caractérisé en ce que**
la force d'application entre les deux bandes de transport (13, 14) de l'une ou des deux unités de transport (13, 14) est réglable.

13. Dispositif selon l'une quelconque des revendications 7 à 12,
**caractérisé par**
une installation d'insertion (21) prévue en dessous de la première unité de transport (13) pour les pièces à revêtir (2) et, en dessous de la seconde unité de transport (14), une installation de dégagement (22) pour les pièces revêtues (24).
